# EUROPEAN PATENT APPLICATION

(11) **EP 4 779 482 A1**
(43) Date of publication of application: **22.07.2026**
(21) Application number: 25194314.8
(22) Date of filing: 06.08.2025
(51) Int. Cl.: G06F 13/12, G06F 13/42, G06F 1/32

(54) **INFORMATION PROCESSING SYSTEM, ELECTRONIC DEVICE RECOGNITION PROCESSING PROGRAM, AND ELECTRONIC DEVICE RECOGNITION PROCESSING METHOD**

(30) Priority: 21.01.2025 JP 2025008742
(71) Applicant: FUJIFILM Business Innovation Corp., Minato-ku Tokyo (JP)
(72) Inventor: KAWABATA, Ryusei, Yokohama-shi, Kanagawa (JP)
(74) Representative: Becker Kurig & Partner Patentanwälte mbB

(57) **Abstract**

An information processing system includes a processor configured to: in a case of connecting a second serial interface provided in an electronic device to a first serial interface provided in the information processing system, execute verification of connection information, which is information used for connecting the second serial interface, in a predetermined order; recognize the connection information of the second serial interface based on a verification result of the connection information of the second serial interface; and in a case where the information processing system transitions to a power saving mode and then returns to a normal state and in a case where previous connection information of the second serial interface has been acquired, connect the electronic device using the previous connection information.

## Description

### BACKGROUND OF THE INVENTION

### (i) Field of the Invention

The present disclosure relates to an information processing system, an electronic device recognition processing program, and an electronic device recognition processing method.

### (ii) Description of Related Art

For example, JP2011-118674A discloses a universal serial bus (USB) host device that communicates with a USB device in a method compliant with a USB standard. The USB host device has a first host controller section that controls communication with the USB device in a method compliant with USB 1.1, and a second host controller section that controls communication with the USB device in a method compliant with USB 2.0. The USB host device includes a USB controller that, in a case where a command is issued to switch to the control by the first host controller section is issued during the control by the second host controller section, stops the control by the second host controller section and starts the control by the first host controller section, and that continues the control by the first host controller section in a case where the USB device is successfully recognized in a method compliant with USB 1.1 after the control is started and stops the control by the first host controller section and returns to a state where the control by the second host controller section is performed in a case where the recognition is not successful. This USB host device includes a control section that, in a case of communicating with a target device that is a USB device compatible with USB 2.0, communicates with the target device in a high speed (HS) mode defined in USB 2.0 using a second host controller possessed by the USB controller until a predetermined switching condition is met, and that issues a command to the USB controller to switch to the control by the first host controller section in a case where the switching condition is met and further issues a command to the USB controller to issue a bus reset to the target device via the first host controller section in a case where the USB controller that has received the command starts the control by the first host controller section, thereby causing the first host controller section to recognize the target device as a USB device compatible with USB 1.1, and thereafter communicating with the target device in a full speed (FS) mode defined in USB 1.1 using a first host controller possessed by the USB controller.

In addition, JP2007-172160A discloses a USB communication device that, in a case of being connected to a USB host device, performs communication at any of a first communication speed or a second communication speed higher than the first communication speed as a USB device. The USB communication device includes a communication failure detection unit that detects occurrence of a communication failure in a case where the USB communication device communicates with the USB host device at the second communication speed, and a switching request unit that generates a request for switching a communication speed to the first communication speed to a USB host communication device in a case where the occurrence of the communication failure is detected by the communication failure detection unit.

### SUMMARY OF THE INVENTION

Incidentally, in a case where an electronic device is connected to a serial interface such as a USB provided in an information processing apparatus, verification of a version of a serial interface provided in the electronic device is executed from a higher version to a lower version according to a serial interface standard, and the version is recognized based on a verification result. For example, in a case where the information processing apparatus is compatible with USB 2.0 and 1.1 and the electronic device is compatible with USB 1.1, connection verification is executed at USB 2.0 and then at USB 1.1.

In a case where the information processing apparatus transitions to a power saving mode while the electronic device is connected, the version recognized for the electronic device is reset. Therefore, in a case where the information processing apparatus returns from the power saving mode, it is necessary to perform the same version verification again. For this reason, it takes time to recognize the version of the serial interface provided in the electronic device.

An object of the present disclosure is to provide an information processing system, an electronic device recognition processing program, and an electronic device recognition processing method that can shorten a time required for recognizing a version of a serial interface provided in a connected electronic device in a case where the information processing system returns from a power saving mode, as compared with a case where the version of the serial interface is sequentially verified.

According to a first aspect of the present disclosure, there is provided an information processing system including a processor configured to: in a case of connecting a second serial interface provided in an electronic device to a first serial interface provided in the information processing system, execute verification of connection information, which is information used for connecting the second serial interface, in a predetermined order; recognize the connection information of the second serial interface based on a verification result of the connection information of the second serial interface; and in a case where the information processing system transitions to a power saving mode and then returns to a normal state and in a case where previous connection information of the second serial interface has been acquired, connect the electronic device using the previous connection information.

In addition, according to a second aspect, in the information processing system according to the first aspect, the connection information of the second serial interface may be at least one of a version or a transmission speed of the second serial interface.

In addition, according to a third aspect, in the information processing system according to the second aspect, the processor may be configured to: execute verification of at least one of the version or the transmission speed of the second serial interface in descending order of the version or the transmission speed.

In addition, according to a fourth aspect, in the information processing system according to the third aspect, verification of at least one of the version or the transmission speed of the second serial interface may be executed by data communication based on a predetermined protocol between the first serial interface and the second serial interface.

In addition, according to a fifth aspect, in the information processing system according to any one of the first to fourth aspects, the processor may be configured to: store the recognized connection information of the second serial interface in a storage unit; and acquire the previous connection information of the second serial interface from the storage unit in a case where the information processing system transitions to the power saving mode and then returns to the normal state.

In addition, according to a sixth aspect, in the information processing system according to any one of the first to fifth aspects, the first serial interface may be compatible with a higher version and a lower version, and the processor may be configured to: disable a driver corresponding to the higher version of the first serial interface in a case where the second serial interface is the lower version.

In addition, according to a seventh aspect, in the information processing system according to the sixth aspect, the processor may be configured to: in a case of connecting another electronic device other than the electronic device to the first serial interface after returning from the power saving mode, enable the driver corresponding to the higher version of the first serial interface; and execute verification of connection information of a second serial interface provided in the other electronic device in a predetermined order.

According to an eighth aspect, there is provided an electronic device recognition processing program causing a computer to execute a process including: executing, in a case of connecting a second serial interface provided in an electronic device to a first serial interface provided in an information processing system, verification of connection information, which is information used for connecting the second serial interface, in a predetermined order; recognizing the connection information of the second serial interface based on a verification result of the connection information of the second serial interface; and connecting, in a case where the information processing system transitions to a power saving mode and then returns to a normal state and in a case where previous connection information of the second serial interface has been acquired, the electronic device using the previous connection information.

According to a ninth aspect, there is provided an electronic device recognition processing method including: executing, in a case of connecting a second serial interface provided in an electronic device to a first serial interface provided in an information processing system, verification of connection information, which is information used for connecting the second serial interface, in a predetermined order; recognizing the connection information of the second serial interface based on a verification result of the connection information of the second serial interface; and connecting, in a case where the information processing system transitions to a power saving mode and then returns to a normal state and in a case where previous connection information of the second serial interface has been acquired, the electronic device using the previous connection information.

According to the first and eighth aspects of the present disclosure, there is an effect that it is possible to shorten the time required for recognizing a version of a serial interface provided in a connected electronic device in a case where the information processing system returns from the power saving mode, as compared with a case where the version of the serial interface is sequentially checked.

According to the second aspect of the present disclosure, there is an effect that it is possible to appropriately verify the version or the transmission speed as compared with a case of performing the verification by using information other than the version and the transmission speed.

According to the third aspect of the present disclosure, there is an effect that it is possible to appropriately verify the version or the transmission speed as compared with a case of executing the verification in descending order of the version or the transmission speed.

According to the fourth aspect of the present disclosure, there is an effect that it is possible to appropriately verify the version or the transmission speed as compared with a case of performing the verification using a method other than the data communication.

According to the fifth aspect of the present disclosure, there is an effect that it is possible to shorten the time required for recognizing the version as compared with a case where the connection information is not stored.

According to the sixth aspect of the present disclosure, there is an effect that it is possible to shorten the time required for recognizing the version as compared with a case where the driver corresponding to the higher version is left valid.

According to the seventh aspect of the present disclosure, there is an effect that it is possible to appropriately verify the version or the transmission speed even in a case where the other electronic device is connected.

According to the ninth aspect of the present disclosure, there is an effect that it is possible to appropriately verify the version or the transmission speed even in a case where the other electronic device is connected.

### BRIEF DESCRIPTION OF THE DRAWINGS

Exemplary embodiment(s) of the present invention will be described in detail based on the following figures, wherein:
FIG. 1 is a diagram showing an example of a configuration of an image processing system according to an exemplary embodiment;
FIG. 2 is a block diagram showing an example of an electrical configuration of an image processing apparatus according to the exemplary embodiment;
FIG. 3 is a block diagram showing an example of a functional configuration of the image processing apparatus according to the exemplary embodiment; and
FIG. 4 is a flowchart showing an example of a flow of electronic device recognition processing by an electronic device recognition processing program according to the exemplary embodiment.

### DETAILED DESCRIPTION OF THE INVENTION

Hereinafter, an exemplary embodiment for carrying out a technology of the present disclosure will be described in detail with reference to the drawings. Components and processing having identical operations, actions, and functions are designated by identical reference signs throughout the drawings, and redundant descriptions may be omitted as appropriate. Each drawing is merely schematically shown to the extent that the technology of the present disclosure can be fully understood. Therefore, the technology of the present disclosure is not limited to only the shown examples. In addition, in the present exemplary embodiment, descriptions of configurations that are not directly related to the technology of the present disclosure and of well-known configurations may be omitted.

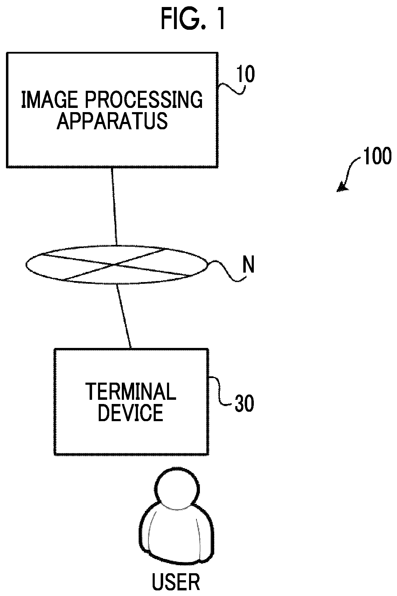

FIG. 1 is a diagram showing an example of a configuration of an image processing system 100 according to the present exemplary embodiment. As shown in FIG. 1, the image processing system 100 according to the present exemplary embodiment includes an image processing apparatus 10 and a terminal device 30. Although one terminal device is illustrated in the example of FIG. 1, the number of the terminal devices is any number. The image processing system 100 is an example of an information processing system, and the information processing system may have a system configuration other than the image processing system.

The image processing apparatus 10 is an apparatus that executes a function related to an image in accordance with an instruction from a user. The image processing apparatus 10 is connected to the terminal device 30 used by the user via a network N. The network N may be the Internet, a local area network (LAN), a wide area network (WAN), or the like. There are no restrictions on a connection form of the network N, and the connection form may be wired, wireless, or a combination of wired and wireless.

As an example, the image processing apparatus 10 has a scan function of reading an image written on a recording medium such as paper as image data, a print function of forming an image represented by the image data on the recording medium, and a copy function of forming an image identical to the image formed on the recording medium on another recording medium. The copy function, the print function, and the scan function are examples of image processing in the image processing apparatus 10.

The terminal device 30 may be, for example, various devices such as a personal computer (PC), a smartphone, and a tablet terminal used by the user.

The user transmits image data generated by the terminal device 30 to the image processing apparatus 10 through the network N, thereby causing the image processing apparatus 10 to execute intended image processing. Alternatively, the user may store the image data in a portable storage medium such as a USB (registered trademark) memory or a memory card, move the portable storage medium to the image processing apparatus 10, and connect the portable storage medium to the image processing apparatus 10, thereby causing the image processing apparatus 10 to execute intended image processing. Further, the user may move to the image processing apparatus 10 while carrying a document containing at least one of text or an image and have the image processing apparatus 10 read the document, thereby causing the image processing apparatus 10 to execute intended image processing.

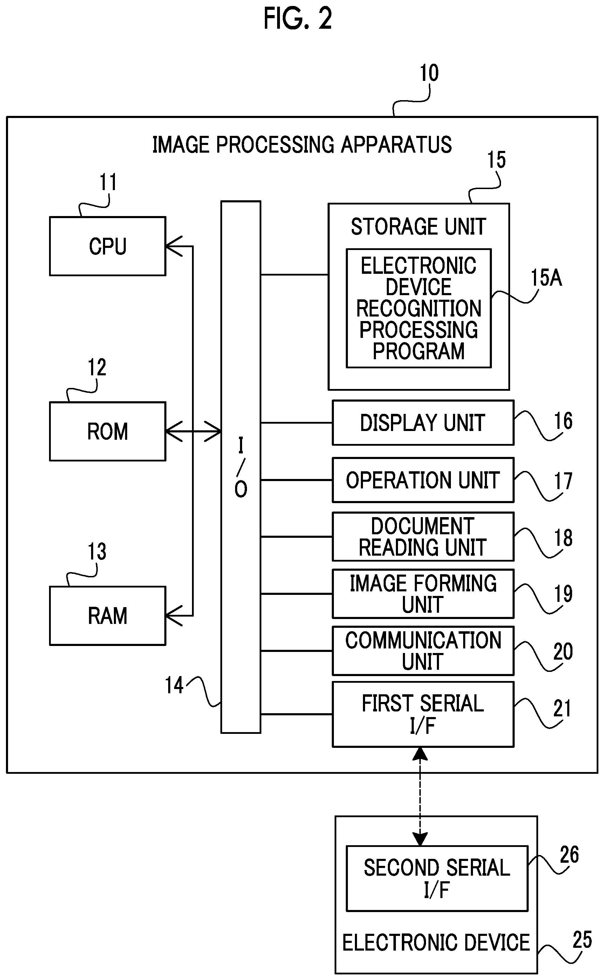

FIG. 2 is a block diagram showing an example of an electrical configuration of the image processing apparatus 10 according to the present exemplary embodiment. As shown in FIG. 2, the image processing apparatus 10 according to the present exemplary embodiment includes a central processing unit (CPU) 11, a read only memory (ROM) 12, a random access memory (RAM) 13, an input/output interface (I/O) 14, a storage unit 15, a display unit 16, an operation unit 17, a document reading unit 18, an image forming unit 19, a communication unit 20, and a first serial I/F 21.

The CPU 11, the ROM 12, the RAM 13, and the I/O 14 are connected to each other via a bus. Respective functional units including the storage unit 15, the display unit 16, the operation unit 17, the document reading unit 18, the image forming unit 19, the communication unit 20, and the first serial I/F are connected to the I/O 14. These functional units can mutually communicate with the CPU 11 via the I/O 14.

The CPU 11, the ROM 12, the RAM 13, and the I/O 14 constitute a control unit. The control unit may be configured as a sub-control unit that controls an operation of a part of the image processing apparatus 10, or may be configured as a part of a main control unit that controls an overall operation of the image processing apparatus 10. For some or all of the blocks of the control unit, an integrated circuit such as a large scale integration (LSI) or an integrated circuit (IC) chip set is used. An individual circuit may be used for each of the blocks, or a circuit in which some or all of the blocks are integrated may be used. The blocks may be provided integrally, or some of the blocks may be provided separately. In addition, in each of the blocks, a part thereof may be separately provided. The integration of the control unit is not limited to an LSI, but a dedicated circuit or a general-purpose processor may be used.

Examples of the storage unit 15 include a hard disk drive (HDD), a solid state drive (SSD), a flash memory, and the like. The storage unit 15 stores an electronic device recognition processing program 15A for executing electronic device recognition processing according to the present exemplary embodiment. The electronic device recognition processing program 15A may be stored in the ROM 12.

The electronic device recognition processing program 15A may be installed in advance in the image processing apparatus 10, for example. The electronic device recognition processing program 15A may be implemented by being stored in a non-volatile storage medium or distributed via the network N and being appropriately installed in the image processing apparatus 10. Examples of the non-volatile storage medium include a compact disc read only memory (CD-ROM), a magneto-optical disc, an HDD, a digital versatile disc read only memory (DVD-ROM), a flash memory, and a memory card.

Examples of the display unit 16 include a liquid crystal display (LCD) and an organic electro luminescence (EL) display. The display unit 16 may integrally have a touch panel. The operation unit 17 is provided with various operation keys such as a numeric keypad and a start key. The display unit 16 and the operation unit 17 receive instructions related to various image processing functions and settings from the user of the image processing apparatus 10 as an operation panel. These various instructions include, for example, an instruction to start reading a document, an instruction to start copying a document, and a print instruction of print data stored in the image processing apparatus 10. The display unit 16 displays various kinds of information such as results of processing executed in response to the instructions received from the user and notifications regarding the processing.

The document reading unit 18 takes in documents placed on a paper feed tray of an automatic document feeder (not shown) provided on an upper portion of the image processing apparatus 10 one by one, and optically reads the taken-in documents to obtain image data. Alternatively, the document reading unit 18 optically reads a document placed on a document stand such as platen glass to obtain image data.

The image forming unit 19 forms an image based on the image data obtained by reading with the document reading unit 18 or based on the image data obtained by a print instruction from the terminal device 30, on paper, which is an example of a recording medium. Hereinafter, an electrophotographic method will be described as an example of a method of forming an image, but another method such as an ink jet method may be adopted.

In a case where the method of forming an image is the electrophotographic method, the image forming unit 19 includes a photoconductor drum, a charging device, an exposure device, a developing device, a transfer device, and a fixing device. The charging device applies a voltage to the photoconductor drum to charge a surface of the photoconductor drum. The exposure device exposes the photoconductor drum charged by the charging device with light corresponding to the image data, thereby forming an electrostatic latent image on the photoconductor drum. The developing device develops the electrostatic latent image formed on the photoconductor drum with toner, thereby forming a toner image on the photoconductor drum. The transfer device transfers the toner image formed on the photoconductor drum onto the paper. The fixing device fixes the toner image transferred onto the paper through heating and pressurizing.

The communication unit 20 is a communication interface for connection to the network N such as the Internet, a LAN, and a WAN, and can communicate with the terminal device 30 via the network N.

The first serial I/F 21 is, for example, an interface for connecting an electronic device 25 compliant with a USB standard. Note that the first serial I/F 21 is not limited to the USB, and may be a serial interface other than the USB. The electronic device 25 is, for example, a USB memory, but may be a device other than the USB memory. The electronic device 25 includes a second serial I/F 26, and the second serial I/F 26 is attachably and detachably connected to the first serial I/F 21.

Here, the first serial I/F 21 is compatible with a higher version and a lower version of the USB standard. A controller (not shown) of the first serial I/F 21 has, for example, logical ports of USB 1.1 and USB 2.0, and performs communication by switching the logical ports depending on a version of the electronic device 25 connected to the first serial I/F 21. In addition to the USB 1.1 and USB 2.0, the controller may have a logical port of USB 3.0 or higher, which is a higher version. In the USB standard, a transmission speed is determined according to a version; for example, USB 1.1 supports a maximum of 12 Mbps, USB 2.0 supports a maximum of 480 Mbps (high-speed mode), and USB 3.0 supports a maximum of 5 Gbps (super-speed mode).

The image processing apparatus 10 has a function of automatically transitioning to a power saving mode, which lowers power consumption, in a case where a power saving mode transition button is pressed or in a case where no operation has been performed for a certain period of time after an immediately previous operation. The "certain period of time" until the transition to the power saving mode can be appropriately set by the user.

Incidentally, as described above, in a case where the electronic device 25 is connected to the first serial I/F 21 provided in the image processing apparatus 10, verification of a version of the USB provided in the electronic device 25 is executed from a higher version to a lower version according to the USB standard, and the version is recognized based on a verification result. In a case where the image processing apparatus 10 transitions to the power saving mode while the electronic device 25 is connected, the version recognized for the electronic device 25 is reset. Therefore, in a case where the information processing apparatus returns from the power saving mode, it is necessary to perform the same version verification again. Therefore, it takes time to recognize the version of the USB provided in the electronic device 25.

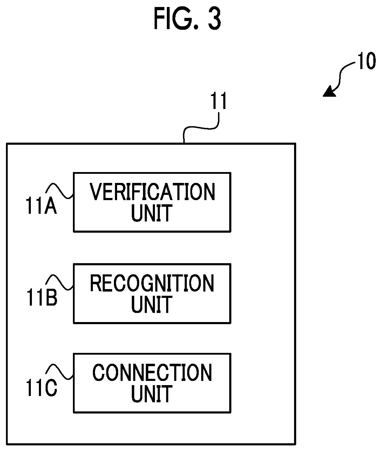

Therefore, the CPU 11 of the image processing apparatus 10 according to the present exemplary embodiment functions as each unit shown in FIG. 3 by writing the electronic device recognition processing program 15A stored in the storage unit 15 into the RAM 13 and executing the electronic device recognition processing program 15A. The CPU 11 is an example of a processor.

FIG. 3 is a block diagram showing an example of a functional configuration of the image processing apparatus 10 according to the present exemplary embodiment. As shown in FIG. 3, the CPU 11 of the image processing apparatus 10 according to the present exemplary embodiment functions as a verification unit 11A, a recognition unit 11B, and a connection unit 11C.

In a case of connecting the second serial I/F 26 provided in the electronic device 25 to the first serial I/F 21 of the image processing apparatus 10, the verification unit 11A executes verification of connection information, which is information used for the connection of the second serial I/F 26, in a predetermined order. Specifically, the connection information of the second serial I/F 26 may be, for example, at least one of a version or a transmission speed of the second serial I/F 26. In this case, the verification unit 11A may execute verification of at least one of the version or the transmission speed of the second serial I/F 26 in descending order of the version or the transmission speed. For example, in a case where the image processing apparatus 10 is compatible with USB 2.0 and 1.1 and the electronic device 25 is compatible with USB 1.1, connection verification is executed at USB 2.0 and then at USB 1.1. Assuming that the electronic device 25 is compatible with USB 2.0 and executes the connection verification starting from the lower USB 1.1. Since the USB standard is backward compatible, in a case where the connection verification is executed starting from the lower USB 1.1, the electronic device 25 is recognized as USB 1.1 even in a case where the electronic device 25 is compatible with USB 2.0. Therefore, it is recommended to execute the connection verification from the higher USB 2.0. Here, verification of at least one of the version or the transmission speed of the second serial I/F 26 is executed by, for example, data communication based on a predetermined protocol between the first serial I/F 21 and the second serial I/F 26.

The recognition unit 11B recognizes the connection information of the second serial I/F 26 based on a verification result of the connection information of the second serial I/F 26. Specifically, for example, in a case where the version of the second serial I/F 26 is 1.1, the second serial I/F 26 is recognized as USB 1.1, and, in a case where the version of the second serial I/F 26 is 2.0, the second serial I/F 26 is recognized as USB 2.0. In addition, in a case where the transmission speed of the second serial I/F 26 is a maximum of 12 Mbps, the second serial I/F 26 is recognized as USB 1.1, and, in a case where the transmission speed of the second serial I/F 26 is a maximum of 480 Mbps, the second serial I/F 26 is recognized as USB 2.0.

In a case where the image processing apparatus 10 transitions to the power saving mode and then returns to a normal state and in a case where the previous connection information of the second serial I/F 26 has been acquired, the connection unit 11C connects the electronic device 25 using the previous connection information. Specifically, the connection unit 11C may store the connection information of the second serial I/F 26 recognized by the recognition unit 11B in the storage unit 15, and acquire the previous connection information of the second serial I/F 26 from the storage unit 15 in a case where the image processing apparatus 10 transitions to the power saving mode and returns to the normal state. As described above, the first serial I/F 21 is compatible with a higher version and a lower version of the USB standard. That is, the first serial I/F 21 includes drivers corresponding to the higher version and the lower version. In this case, in a case where the second serial I/F 26 is the lower version, the connection unit 11C may disable a driver corresponding to the higher version of the first serial I/F 21.

In a case of connecting another electronic device 25A (not shown) other than the electronic device 25 to the first serial I/F 21 after returning from the power saving mode, the connection unit 11C may enable a driver corresponding to the higher version of the first serial I/F 21. In this case, the verification unit 11A executes verification of connection information of a second serial I/F 26A provided in the other electronic device 25A in a predetermined order. Specifically, the verification of the connection information is executed in order from the higher version to the lower version as described above.

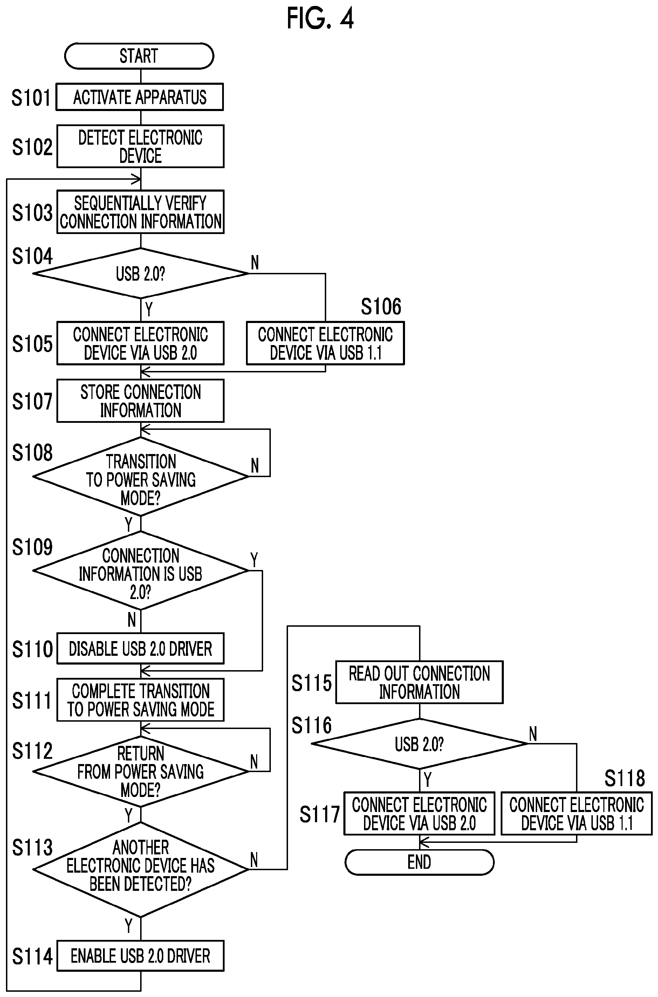

Next, an action of the image processing system 100 according to the present exemplary embodiment will be described with reference to FIG. 4.

FIG. 4 is a flowchart showing an example of a flow of the electronic device recognition processing by the electronic device recognition processing program 15A according to the exemplary embodiment. In a case where an instruction to execute the electronic device recognition processing by the electronic device recognition processing program 15A of the image processing apparatus 10 is issued, the CPU 11 reads out and executes the electronic device recognition processing program 15A stored in the storage unit 15. Here, it is assumed that the image processing apparatus 10 is compatible with USB 1.1 and USB 2.0.

In step S101 of FIG. 4, in a case where the CPU 11 detects, for example, that a power button is pressed by the user, the image processing apparatus 10 is activated.

In step S102, the CPU 11 detects the electronic device 25 connected to the first serial I/F 21.

In step S103, the CPU 11 executes verification of connection information, which is information used for the connection of the second serial I/F 26 provided in the electronic device 25, in a predetermined order. Specifically, as described above, the connection information of the second serial I/F 26 may be, for example, at least one of a version or a transmission speed of the second serial I/F 26. In this case, the CPU 11 may execute verification of at least one of the version or the transmission speed of the second serial I/F 26 in descending order of the version or the transmission speed. For example, in a case where the image processing apparatus 10 is compatible with USB 2.0 and 1.1 and the electronic device 25 is compatible with USB 1.1, connection verification is executed at USB 2.0 and then at USB 1.1.

In step S104, the CPU 11 recognizes the connection information (version or transmission speed) of the second serial I/F 26 based on a verification result of the connection information of the second serial I/F 26. That is, the CPU 11 recognizes whether or not the connection information is USB 2.0 based on the verification result of the connection information. In a case where it is recognized that the connection information is USB 2.0 (in a case of affirmative determination), the process proceeds to step S105, and, in a case where it is recognized that the connection information is not USB 2.0, that is, the connection information is USB 1.1 (in a case of negative determination), the process proceeds to step S106.

In step S105, the CPU 11 connects the electronic device 25 via USB 2.0 recognized in step S104. Hereinafter, the image processing apparatus 10 and the electronic device 25 can communicate with each other at the transmission speed of USB 2.0.

On the other hand, in step S106, the CPU 11 connects the electronic device 25 via USB 1.1 recognized in step S104. Hereinafter, the image processing apparatus 10 and the electronic device 25 can communicate with each other at the transmission speed of USB 1.1.

In step S107, the CPU 11 stores the connection information of the second serial I/F 26 recognized in step S104 in the storage unit 15.

In step S108, the CPU 11 determines whether or not to transition to the power saving mode. The CPU 11 determines whether to transition to the power saving mode by, for example, determining whether or not a certain period of time has elapsed after the immediately previous operation. In a case where it is determined to transition to the power saving mode (in a case of affirmative determination), the process proceeds to step S109, and, in a case where it is determined not to transition to the power saving mode (in a case of negative determination), the process is on standby in step S108.

In step S109, the CPU 11 determines whether or not the connection information stored in step S107 is USB 2.0. In a case where it is determined that the connection information is not USB 2.0, that is, the connection information is USB 1.1 (in a case of negative determination), the process proceeds to step S110. In a case where it is determined that the connection information is USB 2.0 (in a case of affirmative determination), the process proceeds to step S111.

In step S110, the CPU 11 disables the USB 2.0 driver and transitions to step S111. To disable the USB 2.0 driver, for example, the USB 2.0 driver may be temporarily deleted or set to be unavailable.

In step S111, the connection with the electronic device 25 is cut off in conjunction with the transition to the power saving mode, and the CPU 11 completes the transition to the power saving mode. Accordingly, the image processing apparatus 10 enters the power saving mode.

In step S112, the CPU 11 determines whether or not to return from the power saving mode. For example, in a case where any operation is executed on the image processing apparatus 10, it is determined that the image processing apparatus 10 is to return from the power saving mode. In a case where it is determined to return from the power saving mode (in a case of affirmative determination), the process proceeds to step S113, and, in a case where it is determined not to return from the power saving mode (in a case of negative determination), the process is on standby in step S112.

In step S113, the CPU 11 determines whether or not another electronic device 25A has been detected via the first serial I/F 21. In a case where it is determined that the other electronic device 25A has been detected (in a case of affirmative determination), the process proceeds to step S114, and, in a case where it is determined that the other electronic device 25A has not been detected, that is, the electronic device 25 connected before the power saving mode transition has been detected (in a case of negative determination), the process proceeds to step S115.

In step S114, the CPU 11 enables the USB 2.0 driver that is disabled in step S110, and then proceeds to step S103 to repeat the process.

In step S115, the CPU 11 reads out the connection information (previous connection information) stored in the storage unit 15 in step S107.

In step S116, the CPU 11 determines whether or not the connection information read out in step S115 is USB 2.0. In a case where it is determined that the connection information is USB 2.0 (in a case of affirmative determination), the process proceeds to step S117, and, in a case where it is determined that the connection information is not USB 2.0, that is, the connection information is USB 1.1 (in a case of negative determination), the process proceeds to step S118.

In step S117, the CPU 11 connects the electronic device 25 via USB 2.0 determined in step S116, and ends a series of processes by the present electronic device recognition processing program 15A.

On the other hand, in step S118, the CPU 11 connects the electronic device 25 via USB 1.1 determined in step S116, and ends a series of processes by the present electronic device recognition processing program 15A.

As described above, according to the present exemplary embodiment, in a case where the image processing apparatus returns from the power saving mode, it is not necessary to sequentially verify the version of the serial I/F provided in the connected electronic device, and thus the time required for recognizing the version of the serial I/F is shortened. Accordingly, the waiting time of the user in a case of returning from the power saving mode is shortened.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

Regarding the above exemplary embodiment, the following supplementary notes will be disclosed.

### (Supplementary Note)

(((1))) An information processing system comprising:
   a processor configured to:
   in a case of connecting a second serial interface provided in an electronic device to a first serial interface provided in the information processing system, execute verification of connection information, which is information used for connecting the second serial interface, in a predetermined order;
   recognize the connection information of the second serial interface based on a verification result of the connection information of the second serial interface; and
   in a case where the information processing system transitions to a power saving mode and then returns to a normal state and in a case where previous connection information of the second serial interface has been acquired, connect the electronic device using the previous connection information.
(((2))) The information processing system according to (((1))),
   wherein the connection information of the second serial interface is at least one of a version or a transmission speed of the second serial interface.
(((3))) The information processing system according to (((2))), wherein the processor is configured to:
   execute verification of at least one of the version or the transmission speed of the second serial interface in descending order of the version or the transmission speed.
(((4))) The information processing system according to (((3))),
   wherein verification of at least one of the version or the transmission speed of the second serial interface is executed by data communication based on a predetermined protocol between the first serial interface and the second serial interface.
(((5))) The information processing system according to any one of (((1))) to (((4))), wherein the processor is configured to:
   store the recognized connection information of the second serial interface in a storage unit; and
   acquire the previous connection information of the second serial interface from the storage unit in a case where the information processing system transitions to the power saving mode and then returns to the normal state.
(((6))) The information processing system according to any one of (((1))) to (((5))),
   wherein the first serial interface is compatible with a higher version and a lower version, and
   the processor is configured to:
      disable a driver corresponding to the higher version of the first serial interface in a case where the second serial interface is the lower version.
(((7))) The information processing system according to (((6))), wherein the processor is configured to:
   in a case of connecting another electronic device other than the electronic device to the first serial interface after returning from the power saving mode, enable the driver corresponding to the higher version of the first serial interface; and
   execute verification of connection information of a second serial interface provided in the other electronic device in a predetermined order.
(((8))) An electronic device recognition processing program causing a computer to execute a process comprising:
   executing, in a case of connecting a second serial interface provided in an electronic device to a first serial interface provided in an information processing system, verification of connection information, which is information used for connecting the second serial interface, in a predetermined order;
   recognizing the connection information of the second serial interface based on a verification result of the connection information of the second serial interface; and
   connecting, in a case where the information processing system transitions to a power saving mode and then returns to a normal state and in a case where previous connection information of the second serial interface has been acquired, the electronic device using the previous connection information.

According to (((1))) and (((8))), there is an effect that it is possible to shorten the time required for recognizing a version of a serial interface provided in a connected electronic device in a case where the information processing system returns from the power saving mode, as compared with a case where the version of the serial interface is sequentially checked.

According to (((2))), there is an effect that it is possible to appropriately verify the version or the transmission speed as compared with a case of performing the verification by using information other than the version and the transmission speed.

According to (((3))), there is an effect that it is possible to appropriately verify the version or the transmission speed as compared with a case of executing the verification in descending order of the version or the transmission speed.

According to (((4))), there is an effect that it is possible to appropriately verify the version or the transmission speed as compared with a case of performing the verification using a method other than the data communication.

According to (((5))), there is an effect that it is possible to shorten the time required for recognizing the version as compared with a case where the connection information is not stored.

According to (((6))), there is an effect that it is possible to shorten the time required for recognizing the version as compared with a case where the driver corresponding to the higher version is left valid.

According to (((7))), there is an effect that it is possible to appropriately verify the version or the transmission speed even in a case where the other electronic device is connected.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image processing apparatus
11: CPU
11A: verification unit
11B: recognition unit
11C: connection unit
12: ROM
13: RAM
14: I/O
15: storage unit
15A: electronic device recognition processing program
16: display unit
17: operation unit
18: document reading unit
19: image forming unit
20: communication unit
21: first serial I/F
25: electronic device
26: second serial I/F
30: terminal device
100: image processing system

## Claims

1. An information processing system comprising:
a processor configured to:
in a case of connecting a second serial interface provided in an electronic device to a first serial interface provided in the information processing system, execute verification of connection information, which is information used for connecting the second serial interface, in a predetermined order;
recognize the connection information of the second serial interface based on a verification result of the connection information of the second serial interface; and
in a case where the information processing system transitions to a power saving mode and then returns to a normal state and in a case where previous connection information of the second serial interface has been acquired, connect the electronic device using the previous connection information.

2. The information processing system according to claim 1,
wherein the connection information of the second serial interface is at least one of a version or a transmission speed of the second serial interface.

3. The information processing system according to claim 2, wherein the processor is configured to:
execute verification of at least one of the version or the transmission speed of the second serial interface in descending order of the version or the transmission speed.

4. The information processing system according to claim 3,
wherein verification of at least one of the version or the transmission speed of the second serial interface is executed by data communication based on a predetermined protocol between the first serial interface and the second serial interface.

5. The information processing system according to any one of claims 1 to 4, wherein the processor is configured to:
store the recognized connection information of the second serial interface in a storage unit; and
acquire the previous connection information of the second serial interface from the storage unit in a case where the information processing system transitions to the power saving mode and then returns to the normal state.

6. The information processing system according to any one of claims 1 to 5,
wherein the first serial interface is compatible with a higher version and a lower version, and
the processor is configured to:
disable a driver corresponding to the higher version of the first serial interface in a case where the second serial interface is the lower version.

7. The information processing system according to claim 6, wherein the processor is configured to:
in a case of connecting another electronic device other than the electronic device to the first serial interface after returning from the power saving mode, enable the driver corresponding to the higher version of the first serial interface; and
execute verification of connection information of a second serial interface provided in the other electronic device in a predetermined order.

8. An electronic device recognition processing program causing a computer to execute a process comprising:
executing, in a case of connecting a second serial interface provided in an electronic device to a first serial interface provided in an information processing system, verification of connection information, which is information used for connecting the second serial interface, in a predetermined order;
recognizing the connection information of the second serial interface based on a verification result of the connection information of the second serial interface; and
connecting, in a case where the information processing system transitions to a power saving mode and then returns to a normal state and in a case where previous connection information of the second serial interface has been acquired, the electronic device using the previous connection information.

9. An electronic device recognition processing method comprising:
executing, in a case of connecting a second serial interface provided in an electronic device to a first serial interface provided in an information processing system, verification of connection information, which is information used for connecting the second serial interface, in a predetermined order;
recognizing the connection information of the second serial interface based on a verification result of the connection information of the second serial interface; and
connecting, in a case where the information processing system transitions to a power saving mode and then returns to a normal state and in a case where previous connection information of the second serial interface has been acquired, the electronic device using the previous connection information.
